# EUROPÄISCHE PATENTANMELDUNG

(11) **EP 1 652 578 A2**
(43) Veröffentlichungstag der Anmeldung: **03.05.2006**
(21) Anmeldenummer: 05024237.9
(22) Anmeldetag: 01.08.2000
(51) Int. Cl.: B01J 19/00, B01L 3/00

(54) **Mikrofluidischer Reaktionsträger**

(30) Priorität: 01.08.1999 DE 19935433
(62) Teilanmeldung aus: 00953136.9
(71) Anmelder: febit biotech GmbH, 69120 Heidelberg (DE)
(72) Erfinder: Stähler, Cord Friedrich, 69469 Weinheim (DE); Müller, Manfred, 80689 München (DE); Stähler, Peer Friedrich, 68167 Mannheim (DE); Mauritz, Ralf, Dr., 60435 Frankfurt (DE)
(74) Vertreter: Tiesmeyer, Johannes

(57) **Zusammenfassung**

Gegenstand der vorliegenden Erfindung ist die Verwendung eines mikrofluidischen Reaktionsträgers zur insbesondere lichtgesteuerten Synthese und ggf. Analyse von Oligomeren oder Polymeren. Der Reaktionsträger enthält eine Strömungskanalstruktur für das Durchleiten von Fluiden, wobei Zuführungskanäle (2) und Ableitungskanäle (3) durch Verbindungskanäle (4) miteinander verbunden sind, welche Reaktionsbereiche bilden, wobei aus jedem Reaktionsbereich Fluid unter Umgehung der jeweiligen anderen Reaktionsbereiche abführbar ist.

## Beschreibung

Gegenstand der vorliegenden Erfindung ist die Verwendung eines mikrofluidischen Reaktionsträgers zur insbesondere lichtgesteuerten Synthese von Oligomeren oder Polymeren.

Mikrofluidische Systeme stehen allgemein noch am Anfang ihrer Entwicklung. Jedoch stellen sie schon jetzt ein wichtiges Gebiet z.B. im Bereich der Mikropumpen oder Mikroventile dar. Der Schwerpunkt derzeitiger Arbeiten auf diesem Gebiet liegt in der Herstellung miniaturisierter Strukturen bevorzugt unter Einsatz von Verfahren aus der Halbleitertechnik.

Mikrodosiersysteme verknüpfen mikrominiaturisierte Pumpen und Ventile mit Sensoren für Ansteuer- und Regelschaltungen. Solche Systeme werden derzeit für spezielle Anwendungen entwickelt und erprobt, z.B. für die Medikamentendosierung oder die Dosierung von kleinsten Flüssigkeitsmengen im Freistrahl nach dem Prinzip eines Tintenstrahldruckers. Diese werden beispielsweise für die Herstellung von Polymersonden-Arrays verwendet, indem verschiedene biochemische Substanzen auf definierte Positionen eines Trägerkörpers aufgespritzt werden.

Die Vermischung von Medien in Mikrofluidsystemen, etwa in chemischen Mikroreaktoren oder in Bioreaktoren, aber auch in chemischen Analysesystemen ist bisher noch wenig untersucht. Besteht die Notwendigkeit einer sehr raschen Vermischung, so lassen sich jedoch durch den Einsatz speziell konstruierter Wirbelstrecken, oder durch die Verwendung eines ebenfalls miniaturisierten Mischers sehr hohe Mischungsraten erzielen. Die Entwicklung von Mikromischern hat noch keine Marktreife erreicht und befindet sich größtenteils noch im experimentellen Stadium. Die Interaktion von Fluid und Wand, wie sie für den erfindungsgemäßen mikrofluidischen Reaktionsträgers von Bedeutung ist, wurde bisher noch nicht näher untersucht.

Die Realisierung kompletter Mikrofluidanalyse-Systeme wurde bisher nur in einigen Fällen durchgeführt, z.B. in Systemen zur Analyse des Schwermetallgehalts im Grundwasser. Für die Herstellung von Test- und Funktionsmustern solcher Mikrofluidanalyse-Systeme werden bevorzugt verschiedene etablierte Silizium-Technologien, wie zum Beispiel isotropes und anisotropes Ätzen, verwendet.

Ein großer Nachteil der Silizumtechnik ist der relativ hohe Materialpreis. Deshalb werden aktuell verschiedene kostengünstige Technologien entwickelt, welche die Herstellung von Mikrostrukturen als "Wegwerfartikel" erlauben. Drei dieser Verfahren sind Mikro-Spritzguß, miniaturisierte Heißprägeverfahren (hot molding) oder die sogenannte LIGA (Lichtinduzierte Galvanoabformung) Technik. Diese Verfahren erlauben im Versuchsstadium die Herstellung von Mikrostrukturen mit Abmessungen kleiner 1 µm.

Heute werden diese Entwicklungen beispielsweise in der DNA-Analytik angewendet. Hierbei ist das aktuelle Forschungsthema eine möglichst schnelle und daher hochparallele Detektion. Die Kombination von Hybridisierung als Nachweisprinzip und optischer Signaldetektion ist am weitesten fortgeschritten. In den USA wird die Entwicklung dieser miniaturisierten Detektions-Chips mit enormem Aufwand vorangetrieben. Die Leistungsfähigkeit in der Analyse liegt hier im Bereich von 10⁴ bis maximal 10⁵ Basen pro Stunde.

Ziel ist daher die Entwicklung einer Technologie, mit Hilfe derer man im Bereich von 10⁸ und mehr Basen pro Stunde analysieren und die ermittelten Daten so aufbereiten kann, daß eine sinnvolle Interaktion zwischen Bediener und dem einzusetzenden Gerät möglich ist. Das Herzstück eines solchen Gerätes ist der Gegenstand dieser Erfindung und soll im folgenden als mikrofluidischer Reaktionsträger beschrieben werden. Dieser erfindungsgemäße Reaktionsträger soll beispielsweise das zentrale Bauteil von Systemen zur automatischen Fragmentsynthese und -analyse von Oligo- bzw. Polymeren darstellen. Ein solches System ist in der Patentanmeldung 19924327.1 beschrieben.

Der erfindungsgemäß verwendete Reaktionsträger beinhaltet eine Struktur aus Mikrokanälen unterschiedlicher Größe, Geometrie und Funktion. Ein Teil der Mikrokanäle dient der Fluidzufuhr und abfuhr. Alle weiteren Kanäle dienen als Reaktionsbereiche, wobei je nach Anwendung optional auch Fluidreservoirs etc. in die Mikrostruktur integriert werden können. Der Reaktionsträger wird entweder in einer zwei- oder einer dreidimensionalen Struktur durchströmt. Die zweidimensionale Ausführungsvariante besteht aus mindestens jeweils einem Zuführungs- und einem Abführungskanal in einer Strömungsebene. Diese beiden Kanäle sind durch mehrere etwa senkrecht hierzu verlaufende Kanäle verbunden, wobei diese senkrechten Verbindungskanäle als bevorzugte Reaktionsbereiche dienen. Die somit entstehenden Reaktionskanäle können ebenfalls wieder in kleinere Kanäle unterteilt sein, wobei jeder Reaktionskanal einen oder mehrere Reaktionsbereiche umfaßt. Diese Reaktionsbereiche können zum Beispiel entlang des Kanals angeordnet sein.

Die komplexere dreidimensionale Ausführungsvariante besteht aus drei Strömungsebenen. Die Zuführungskanäle sind jeweils zueinander parallel in einer ersten Strömungsebene und die Abführungskanäle jeweils zueinander parallel in einer dritten Strömungsebene angeordnet, wobei Zuführungs- und Abführungskanäle in einer senkrechten Projektion entweder parallel zueinander oder unter einem Winkel zueinander angeordnet sind, wobei dieser Winkel vorzugsweise annähernd gleich 90° gewählt wird. An den Kreuzungspunkten der Kanäle in deren senkrechter Projektion in der gewinkelten Anordnung oder entlang der Kanäle in der parallelen Anordnung sind außerdem senkrechte Kanäle angeordnet, die eine dritte Strömungsebene bilden und die Zuführungskanäle der ersten mit den Abführungskanälen der dritten Ebene verbinden. Diese Verbindungskanäle sind wesentlich enger als die Zuführungs- und Abführungskanäle. Damit wird ein Überströmen der Reaktionsbereiche in den Zuführungs- und Abführungskanälen ohne Eindringen von Fluid in die Reaktionskanäle ermöglicht. Mehrere Reaktionskanäle zusammen bilden einen Reaktionsbereich.

Damit sind die technischen Voraussetzungen für eine sehr schnelle, effiziente und damit kostengünstige Bereitstellung einer Vielzahl von Reaktionsbereichen geschaffen, zum Beispiel für die integrierte Synthese einer Vielzahl von Polymersonden und die Analyse einer Vielzahl von Polymerfragmenten mittels dieser Sonden.

In allen Ausführungsvarianten werden die Fluide aus den Reaktionsbereichen abgeführt, ohne daß dabei ein Kontakt dieser Fluide mit einem anderen Reaktionsbereich des gesamten Reaktionsträgers erfolgen würde. Dies ist vor allem bei Reaktionen relevant, deren Abfallprodukte andere Reaktionsbereiche schädigen oder zerstören könnten.

Alle drei Varianten des erfindungsgemäß zu verwendenden mikrofluidischen Reaktionsträgers haben auf der Ober- und der Unterseite jeweils eine Deckschicht. Bei der zweidimensionalen Struktur sowie bei den parallelen Zuführungs- und Abführungskanälen der dreidimensionalen Struktur ist mindestens eine der Deckschichten transparent ausgebildet, um eine lichtgesteuerte Photoaktivierung in den einzelnen Reaktionsbereichen durch individuelle Belichtung z.B. mittels einer programmierbaren Lichtquellenmatrix zu ermöglichen wie sie in der Patentanmeldung 199 07 080.6 beschrieben ist. Alle drei Varianten werden bevorzugt mit zwei transparenten Deckschichten ausgeführt um eine permanente optische Prozesskontrolle im Reaktionsträger sowie die Messung von Nachweisreaktionen im Durchlicht zu ermöglichen.

Für lichtabhängige Photoaktivierung sind verschiedene Schutzgruppen bekannt und verfügbar, die zum Teil auch bei der Synthese von Microarrays zur Anwendung kommen. Hierzu zählen als Beispiele MeNPOC, NPPOC und dessen Derivate sowie einige ältere Schutzgruppen, wie sie von Pillai (Synthesis, 1980); Hadrisan und Pillai (Proc. lndian nat. Sci. Acad. 53, 1987) oder Birr et al (Liebigs Ann. Chem. 763, 1972) beschrieben wurden.

Außerdem sind auch Methoden bekannt, bei denen die Photoaktivierung indirekt über die lichtabhängige Aktivierung einer Säure (Photosäure) zu einer anschließenden ortsaufgelösten Abspaltung einer säurelabilen Schutzgruppe wie z.B. DMT führt (siehe Gao et al in WO 9941007). Einen ähnlichen Mechanismus kann man sich zunutze machen, wenn man geeignete Photolacke auf den Reaktionsträger aufbringt (siehe McGall in PNAS 93, S. 13555 -13560, 1996).

Über diese chemischen Methoden hinaus ist außerdem denkbar, die Synthese durch Photoaktivierung und Photo-Deaktivierung von Enzymen zu steuern.

Die komplexere dreidimensionale Struktur mit den um einen Winkel gedrehten Zuführungs- und Abführungskanälen ermöglicht das individuelle Bespülen jedes einzelnen Reaktionsbereiches aus den senkrecht angeordneten Mikrokanälen. Dies erfolgt indem jeweils ein Zuführungskanal mit Fluid bespült und an einem Abführungskanal Fluid abgeführt wird. Das Fluid fließt durch den Zuführungskanal in die senkrechten Mikroreaktionskanäle und durch den Abführungskanal wieder aus dem Reaktionsträger hinaus. Genauso können auch mehrere Reaktionsbereiche gleichzeitig und dies sogar mit unterschiedlichen Fluiden bespült werden. Damit erschließt der erfindungsgemäße mikrofluidische Reaktionsträger mit der durch die gewinkelte Anordnung bedingten "Kreuzstruktur" eine Vielfalt an Anwendungen aus der Kombinatorischen Chemie oder der DNA-Analytik.

Eine weitere Anwendung ist das abwechselnde Beströmen zunächst aller Zuführungs- und Abführungskanäle mit Einsatzstoffen, wobei die Funktion der Fluidzufuhr und -abfuhr der Zuführungs- und Abführungskanäle von Zyklus zu Zyklus wechselt. Wird beispielsweise jeder Kanal mit einem anderen Baustein einer zu synthetisierenden Polymersonde bespült, so kann durch die Anwendung der Kreuzstruktur in wenigen Zyklen eine große Vielfalt an Oligomer- oder Polymersonden in den einzelnen Reaktionsbereichen eines Reaktionsträgers erzeugt werden. Die Synthese beliebig spezifischer Einzelsonden in einem Reaktionsbereich ist durch die zuvor beschriebene Einzelansteuerung eines Reaktionsbereiches in Ergänzung problemlos möglich. Damit bietet der erfindungsgemäße mikrofluidische Reaktionsträger mit der Kreuzstruktur die Möglichkeit zur effizienten naßchemischen Oligomersonden- oder Polymersondensynthese von Sonden-Arrays. Diese Vorgehensweise soll im folgenden als fluidisches Multiplexen bezeichnet werden. Auch die In-situ-Synthese mittels Prozessüberwachung sowie die integrierte Synthese- und Analyse sind damit möglich.

Für die rein fluidische Reaktionssteuerung sind keine lichtdurchlässigen Deckschichten notwendig, jedoch ebenfalls sinnvoll für die optische Prozesskontrolle und die Erfassung von Nachweisreaktionen. Die Detektion kann hierbei ebenfalls entweder im Durchlicht oder auch im Rücklicht von einer Seite erfolgen. Kombiniert man die dreidimensionale Kreuzstruktur mit ihren um einen Winkel gedreht angeordneten Zuführungs- und Abführungskanälen mit der lichtgesteuerten Photoaktivierung der Reaktionsbereiche aus Mikrokanälen, so kann man die Effizienz der Synthese von Oligomer- oder Polymersonden noch weiter erhöhen. Sowohl die Lichtquellenmatrix als Lichtquelle als auch der benötigte Detektor können in den mikrofluidischen Reaktionsträger integriert werden. Gleiches gilt für die Integration einer CCD-Matrix als zweite gegenüberliegende Deckschicht. Auch ein direkter Anschluß einer programmierbaren Lichtquellenmatrix als Deckschicht ist möglich. Dies ist insbesondere dann naheliegend, wenn der mikrofluidische Reaktionsträger als festes Bauteil in ein Gerät integriert ist und zwischen den Anwendungen z.B. chemisch gereinigt wird und nur zu Wartungszwecken gewechselt werden muß. Wird der mikrofluidische Reaktionsträger nach jeder Verwendung ausgewechselt, so ist eine direkte Integration jedoch nicht sinnvoll. Vielmehr empfiehlt es sich dann, die Komponenten im System entsprechend anzuordnen.

Ebenfalls Gegenstand der Erfindung ist die Versorgung des mikrofluidische Reaktionsträgers mit den entsprechenden Fluiden. Hierzu wurde ein ebenfalls neuartiges, integriertes Ventilsystem konzipiert. Dies erlaubt eine schnelle Bereitstellung einer Vielzahl an Fluiden an den Zuführungs- und Abführungskanälen der Mikrostruktur.

Dieses Fluidversorgungssystem ist für die Anwendung des erfindungsgemäßen mikrofluidischen Reaktionsträgers für den Aufbau von Oligomer- oder Polymersondenarrays in den Reaktionsbereichen konzipiert. Das Versorgungssystem gleicht sich in den Anschlüssen und Komponenten für die oberen und die unteren Zuführungs- und Abführungskanäle. Von der einen Seite her werden alle Kanäle individuell über ein im folgenden beschriebenes Multiplexventil versorgt. Am jeweils dazugehörigen anderen Kanalende werden alle Kanäle zusammengeführt, wobei diese Zusammenführung für die Zu- und Abführung bei einheitlicher Bespülung aller Reaktionsbereiche verwendet wird. Bei der Synthese von Oligomer- oder Polymersonden in den Reaktionsbereichen sind dies alle Zyklen außer der Zuführung der spezifischen einzelnen Bausteine, beispielsweise bestehend aus einem oder mehreren Nukleotiden im Fall der DNA-Synthese. Will man alle Reaktionsbereiche erreichen und nicht spezifisch auswählen, so ist es besser, eine strömungsoptimierte Zuführung wie beispielsweise eine duale Verästelung zu wählen, als über das Multiplexventil mit dem höheren Verschleppungsrisiko. Für das Zuführen der spezifischen Bausteine benötigt man jedoch das Ventil. Dieses verbindet die Mikrokanäle des Reaktionsträgers auf der einen Seite mit einer maximal gleich großen Anzahl an individuellen Tanks sowie einem Sammelanschluß auf der anderen Seite. ln einer Position des Ventils wird jeweils ein Tank mit einem oder mehreren Kanälen des Reaktionsträgers verbunden. Soll das Fluid eines Tanks in einem Zyklus in mehr als einen Kanal bzw. ein Kanalbündel des Reaktionsträgers gelangen, so wird erst ein Kanal und anschließend weitere Kanäle seriell versorgt. Der Sammelanschluß entspricht der Zusammenführung der Kanäle auf der jeweils gegenüberliegenden Seite des Reaktionsträgers. Er dient der effizienten Spülung von Ventil und Reaktionsträger.

Die Anschlüsse des mikrofluidischen Reaktionsträgers an seine Fluidversorgung und Fluidentsorgung ist ein wichtiges Element. Wird der Reaktionsträger in der spezifischen Anwendung immer wieder gereinigt und wiederverwendet, so kann eine aufwendiger Anschlußtechnik, beispielsweise an das Multiplexventil vorgesehen werden. Hierbei ist, insbesondere bei einer großen Anzahl von Kanälen, eine Ausführung analog der Halbleiterprozessortechnik mit einer Vielzahl an kleinsten Kanälen in sogenannten "Beinen" möglich. Diese Ausführung hat strömungstechisch den Nachteil der Gefahr von Ablagerungen in den Biegungen und Knicken der einzelnen Mikrokanäle. Hier kann eine Hinterspülung wie zur Vermeidung von Verschleppungen vorgesehen werden. Bei der Anwendungsvariante, in welcher der Reaktionsträger nach jeder Anwendung ausgewechselt wird, sind schnelle und ohne Klebung dichtende Anschlüsse notwendig. Dabei kann zum Beispiel flächig an der Stirnseite des Reaktionsträgers mit durchgehendem biegungsfreiem Kanalverlauf angeschlossen werden. Somit ist das Verschleppungsrisiko minimal. Eine zweite Alternative ist das Aufpressen der Unterseite des Reaktionsträgers auf die Fluidzuführung. Geeignete chemikalienbeständige Dichtungen sind dabei jeweils vorzusehen.

Unter einem Aspekt der Erfindung soll unter einer Reinigung insbesondere eine vollständige Regenerierung des Reaktionsträgers verstanden werden. Im regenerierten Zustand kann dieser dann wieder zu einer neuen Polymersynthese benutzt werden. Bei der chemischen Reinigung ist vorzugsweise zu beachten, dass die für die Anbindung eines ersten Polymerbausteins notwendige Anknüpfungsstelle nicht zerstört wird. Die für die chemische Reinigung notwendige Sollbruchstelle kann durch chemische (z.B. nasschemische, photochemische, elektrochemische) oder durch eine biologische (z.B. enzymatische) Transformation gespalten werden. Dies kann durch einen ein- oder mehrstufigen Prozess erfolgen. Vorzugsweise wird die Sollbruchstelle bei der ersten Oberflächenderivatisierung des mikrofluidischen Reaktionsträgers - vorzugsweise im Linkersystem, das die Oberfläche mit dem ersten Polymerbaustein verbindet - bereitgestellt. Es ist jeweils sichergestellt, dass die Sollbruchstelle weder während der Synthese noch während der Analyse durch die verwendeten Analyten oder Reagenzien gebrochen werden kann.

### Einstufiger Prozess:

Die Sollbruchstelle wird durch eine einzige Transformation gebrochen. Beispiele hierfür sind basenlabile Linker, säurelabile Linker, oxidationslabile Linker oder der Abbau mit Hilfe von geeigneten Enzymen.

Neben einer chemischen Reinigung kann damit auch eine enzymatische Reinigung des Reaktionsträgers durchgeführt werden. Hierbei werden die mit dem Reaktionsträger verknüpften Polymer- bzw. Oligomersonden mit einem DNA- bzw. RNA-abbauenden Enzym oder einem Peptid-spaltenden Enzym gespalten bzw. "verdaut", wodurch es zu einem teilweisen oder vollständigen Abbau der Sonden kommt. Im Anschluss kann der Reaktionsträger erneut zur Synthese neuer Sonden verwendet werden.

Als Enzyme kommen Nucleasen wie Exonucleasen oder Endonucleasen in Frage, die einen Nucleinsäurestrang von den Enden bzw. innerhalb des Sondenstrangs angreifen und Nucleotide bzw. Nucleoside als Spaltprodukte hinterlassen. Im Falle von RNA ist die Verwendung von RNAsen (wie RNAse H usw.) möglich, die bei Ausbildung eines RNA-DNA-Doppelstrangs selektiv den RNA-Teil zerschneiden, wodurch bei RNA-Sonden die gesamte Sonde und bei RNA-Teilabschnitten als Sollbruchstelle der RNA-Abschnitt gespalten wird. Die Regeneration eines Reaktionsträgers mit DNA-Sonden kann ebenfalls durch Einsatz von DNAsen (DNAse 1, DNAse II, etc.) erreicht werden, wodurch sowohl einzelsträngige als auch doppelsträngige DNA abgebaut werden kann.

Ebenfalls können Peptid-spaltende Enzyme für den Abbau von Peptidsonden bzw. Peptid-Sequenzabschnitten als Sollbruchstelle eingesetzt werden.

### Mehrstufiger Prozess:

Die Sollbruchstelle wird in einem mehrstufigen Prozess gebrochen, d.h. die Sollbruchstelle ist in einer Form maskiert. Hierzu ist notwendig, dass diese Maskierung in einem oder mehreren Schritten zunächst entfernt wird, bevor im darauffolgenden Schritt die Sollbruchstelle dann letzendlich gebrochen werden kann.

Als ein Beispiel kann ein maskierter photolabiler Linker verwendet werden, in dem durch eine vorgeschaltete Transformation eine für die Photolabilität notwendige o-Nitrofunktion erst generiert wird. Das kann z.B. durch Oxidation einer Aminofunktion erfolgen. Dieser - nicht notwendigerweise spezifische - Oxidationsschritt kann enzymatisch oder nasschemisch erfolgen. lst die o-Nitrofunktion erzeugt, kann dann die Spaltung der Sollbruchstelle durch Lichteinstrahlung erfolgen.

Als eine weitere Lösung kann in einem ersten Schritt eine doppelsträngige DNA-Sequenz durch Zugabe eines zum Linker komplementären Analyten erzeugt werden, die dann im folgenden Schritt durch ein spezielles Enzym (Restriktionsenzym) erkannt und spezifisch abgespalten wird.

Bei Verwendung eines RNA-Teilabschnitts als Sonden"Sockel" kann eine chemische Regeneration des Reaktionsträgers ebenfalls in mehreren Stufen erfolgen. Dabei wird zunächst die Synthese unter Verwendung von 2'-OHgeschützten Phosphitamidbausteinen durchgeführt. Nach Hybridisierung und Analyse wird für die Regeneration die Schutzgruppe des RNA-Teilabschnitts abgespalten, woraus eine freie 2'-OH-Gruppe resultiert. Daraufhin kann in einem folgenden chemischen Reaktionsschritt mit Hilfe von Perjodat oder anderen Oxidationsmitteln der Ribosezucker gespalten und die Sonde durch ß-Eliminierung vom Reaktionsträger entfernt werden.

Den vorstehend beschriebenen Prozessen der Reinigung (Rezeptorabspaltung) kommt im Rahmen der Erfindung selbständige Bedeutung unabhängig von einer speziellen Träger-Ausgestaltung zu. Der Anmelder behält sich vor, ggf. selbständige Patentansprüche zu der beschriebenen Technologie der Reinigung bzw. Rezeptorabspaltung aufzustellen.

Es sei darauf hingewiesen, dass die Rezeptorabspaltung bzw. Molekülabspaltung im vorstehend erläuterten Sinne auch dazu durchgeführt werden kann, abgespaltene Moleküle zu sammeln und für weitere chemische Prozesse, z.B. für einen Syntheseschritt, einzusetzen. In diesem Sinne können die Reinigungsprozesse als Schritte zur Gewinnung von auf einem Träger synthetisierten Molekülen betrachtet werden.

Der Aufbau des erfindungsgemäßen mikrofluidische Reaktionsträger erfolgt wie dies auch in der Halbleiter-Mikrotechnik üblich ist in mehreren Schichten. Hierbei kann zwischen einer Einteilung der Mikrostruktur in funktionale Schichten und konstruktionsbedingte Schichten unterschieden werden.

Während es in einer zweidimensionalen Struktur mindestens drei funktionale Schichten gibt, besteht eine dreidimensionale Struktur aus mindestens fünf funktionalen Schichten. Diese funktionalen Schichten sind nachfolgend näher beschrieben. ln der Produktion lassen sich oft mehrere dieser funktionalen Schichten mittels geeigneter Herstellungsverfahren in eine konstruktionsbedingte Schicht integrieren.

Die funktionalen Schichten der zweidimensionalen Struktur enthalten eine mittlere Strukturschicht, in welche die Mikroströmungsstruktur aus Kanälen, Reaktionsbereichen und Reservoirs eingebracht ist. Sie wird mit einer oberen und einer unteren Deckschicht verbunden und kann aus Glas, Kunststoff oder Silizium beschaffen sein. Je nach Ausführung kann das verwendete Material transparent oder auch lichtundurchlässig sein. Beispielsweise empfiehlt sich als lichtundurchlässiges Material Futoran-Glas der Firma Schott, Silizium oder Teflon.

Die dreidimensionalen Strukturen bestehen aus fünf Funktionalen Schichten. Einer ersten, oberen Deckschicht, einer darunterliegenden Struktur aus Mikrokanälen für die Fluidzuführung und Abführung in zur zweidimensionalen Struktur analogen Weise, einer mittleren Ebene aus senkrechten, (bevorzugt um mindestens den Faktor 10) kleineren Mikrokanälen, welche als Reaktionsbereiche dienen. Auf der Unterseite schließen sich wieder eine Ebene für Fluidversorgung und eine Deckschicht an, die beide analog zur Oberseite ausgebildet sind. Insgesamt ist der Reaktionsträger spiegelbildlich zu einer mittleren Ebene aufgebaut. Die Herstellung muß sich nicht unbedingt nach den funktionalen Schichten richten. So ist eine Integration der Zuführungs- und Abführungsstruktur sowohl in der mittleren Schicht als auch in der Deckschicht möglich. Für die mittlere Schicht mit den senkrechten Mikrokanälen als Reaktionsbereiche können beispielsweise geeignete Silizium-Wafer aus der Halbleitertechnik mit geätzten Poren der Firma Siemens oder zusammengeschmolzene Glasfasern (Fiberglas-Wafern) der Firma Schott mit herausgeätzten Seelen und einem Größenverhältnis zwischen Wandstärke und Kanalquerschnitt von vorzugsweise 1 zu 5 verwendet werden. Um die exakte Bespülung nur der angesteuerten Reaktionskanäle zu verbessern, kann die mittlere funktionale Ebene durch eine obere und eine untere Zwischenschicht ergänzt werden. Diese verhindert bzw. erschwert ein ungewolltes Einströmen von Fluiden (hydrophile bzw. hydrophobe Barrieren).

Die notwendigen Herstellungsverfahren unterscheiden sich je nach dem verwendeten Material. Bei Silizium-, Glas- und Fiberglaswafern (mit und ohne Seele) kommen als Verbindungstechniken Bonding-Verfahren zum Einsatz. Die Teile, wie zum Beispiel die verschieden Wafer, werden durch Ätztechniken sowie Sägen und Polieren hergestellt. Für die Verwendung von Kunststoffen wie Teflon, welches lichtundurchlässig ist, und COC oder Polystyrol, welches transparent ist, kommen Verfahren wie Spritzguss, Heißprägen oder LIGA zum Einsatz. Die Verbindung von Bauteilen erfolgt z.B. mittels Kleben oder Ultraschallschweißen oder durch mechanische Druckdichtung mittels einer Halterung oder eines Rahmens.

Die obere Deckschicht schließt die darunterliegende Mikroströmungsstruktur nach außen ab. Hierdurch entstehen die Mikrokanäle. Für den Eintrag von Licht in diese Kanäle ist die Schicht lichtdurchlässig ausgebildet. Für eine optimierte Optik können auch Mikrolinsen in Glas der Firma Mikroglas oder Kunststoff (IMM Mainz) verwendet werden. Möglich ist ebenfalls der Einsatz einer Wabenstruktur aus zusammengeschmolzenen Glasfasern, die z.B. von der Firma Schott oder ITT entwickelt wurde und beispielsweise bei Nachtsichtgeräten zum Einsatz kommt. Hierzu werden lange Glasfaserbündel so erhitzt, daß sie zusammenschmelzen und eine Einheit bilden. Auf diese Weise entsteht eine Stange , von welcher dann in zur Siliziumtechnologie analogen Weise dünne Scheiben abgesägt und poliert werden. Diese können anschließend mit Glas oder Silizium gebondet oder mit Kunststoffen verklebt bzw. verschweißt werden.

Der erfindungsgemäße mikrofluidische Reaktionsträger wird in seiner bestimmungsgemäßen Verwendung folgendermaßen eingesetzt: Zunächst wird eine Gruppe von Reaktionsbereichen durch die Mikrokanäle einer zwei- bzw. dreidimensionalen Mikrostruktur angesteuert. Nach der dort erfolgten Reaktion werden die in den einzelnen Reaktionsbereichen entstehenden Reaktionsprodukte durch Mikrokanäle abgeführt, ohne daß dabei die Reaktionsprodukte einen weiteren Reaktionsbereich durchströmen. Dabei kann eine Ansteuerung der Reaktionsbereiche in der beschriebenen dreidimensionalen Kreuzstruktur zur rein fluidischen Synthese von Oligo- oder Polymeren aus Mono-, Oligo- oder Polymeren, oder auch zur Beschleunigung der lichtgesteuerten Synthese oder einer kombinierten nasschemischen und lichtgesteuerten Synthese von Oligomeren oder Polymeren durch das beschriebene intelligente Multiplexen der Einsatzstoffe genutzt werden.

Währenddessen erfolgt eine optische Kontrolle aller Reaktionsbereiche und Mikrokanäle durch transparente Deckschichten als Plattform für eine In-Situ-Synthese, eine permanente Prozesskontrolle und Regelung der Abläufe in der Mikrostruktur. Damit ist die Basis für eine umfassende Qualitätssicherung geschaffen. Lichtsignale von Nachweisreaktionen, welche in den Reaktionsbereichen durch chemische (z.B. Lumineszenz), biochemische (z.B. Biolumineszenz) oder lichtinduzierte (z.B. Fluoreszenz) Reaktionen entstehen, können in einem den fluidischen Mikroprozessor umgebenden integrierten Synthese- und Analysegerät, wie es in der Patentanmeldung 19924327.1 beschrieben ist, erfaßt werden. Weiterhin möglich sind Absorptionsmessungen im Reaktionsträger durch die Erfassung von Lichtsignalen, welche die Mikrokanäle und Reaktionsbereiche im Durchlichtverfahren durchqueren oder im Rücklichtverfahren reflektiert werden. Dies kann zum Beispiel für eine erweiterte qualitative Qualitätssicherung genutzt werden.

Die Vorteile dieses erfindungsgemäßen mikrofluidischen Reaktionsträgers sind vielfältig: Zum einen werden die Reaktionsprodukte von jedem Reaktionsbereich abgeführt, ohne daß ein weiterer Reaktionsbereich mit den Reaktionsprodukten in Berührung kommt. Dies ermöglicht die Durchführung von Reaktionen für die Synthese und Analyse in den Reaktionsbereichen, welche Reaktionsprodukte (Endprodukte oder Zwischenprodukte) erzeugen, die für andere Reaktionsbereiche schädlich wären.

lm Vergleich zu planaren Flächen haben die dreidimensionalen Mikrokanäle eine größere als Festphase nutzbare Oberfläche.

Die Verwendung von Mikrostrukturen reduziert die für die Reaktionen benötigte Fluidmenge und erhöht gleichzeitig die Reaktionsgeschwindigkeit. Dies gilt sowohl für kovalente Bindungen wie auch zum Beispiel für die Hybridisierungszeiten bei Anwendungen in der DNA, RNA, PNA, LNA- Analytik oder bei Proteinanwendungen.

Durch transparente Deckschichten werden Photoreaktionen zum Beispiel für die lichtgesteuerte Synthese von DNA, RNA, PNA, LNA oder Proteinen, etc. ermöglicht.

Außerdem wird durch die transparenten Deckschichten eine permanente Prozesskontrolle für die Regelung der Reaktionen sowie der Fluidik im Reaktionsträger ermöglicht. Dadurch werden die Fehler sowohl bei der Produktion als auch bei der Detektion deutlich reduziert, womit sich die Zahl der auswertbaren Messungen pro Material- und Zeiteinsatz erhöht.

Durch eine geeignete Auslegung der Geometrie der einzelnen Reaktionsbereiche sowie der Mikrokanäle zwischen den Reaktionsbereichen lassen sich die Strahlengänge unter Berücksichtigung der auftretenden Brechungsindizes im Reaktionsträger gezielt beeinflussen.

Die erfindungsgemäßen fluidischen Mikroprozessoren können als einfache Komponenten für den einmaligen Gebrauch ausgeführt werden. Prinzipiell sind hier kostengünstige Kunststoff- Strukturen zu bevorzugen, aber auch Glas- und Silizium oder auch Materialkombinationen sind als Ausführungen möglich. Die schnelle und kostengünstige Produktion wird eine Vielfalt von individuellen Anwendungen ermöglichen, bei denen z.B. unter Berücksichtigung von Sequenz- und Gendatenbanken im Internet gezielt Sonden-Arrays synthetisiert und analysiert werden können.

Dabei finden die Reaktionen immer an den Wänden der Mikroreaktionskanäle statt. Folglich sind die Reaktionsbereiche immer dreidimensional ausgeprägt und haben eine erheblich größere Oberfläche als die planare Grundfläche. Durch diese dreidimensionale Geometrie ist also die nutzbare Reaktionsoberfläche stark vergrößert. Diese Größe der Oberfläche ist für die Verwendung als feste Phase von großer Bedeutung. Sie kann zum Beispiel für die Anlagerung von Oligonukleotiden bei der Synthese im Reaktionsträger ebenso von Bedeutung sein wie für die Anlagerung von vorbeiströmenden Proben-Fragmente bei einer Analyse im Reaktionsträger.

Die dreidimensionale Kreuz- Struktur ermöglicht Anwendungen zum Beispiel in der Oligonukleotid- Analytik oder in der Kombinatorischen Chemie etc. Durch die Verwendung der beiden sich überkreuzenden Strukturen läßt sich schnell eine Vielzahl an unterschiedlichen Kombinationen von Oligomeren oder Polymeren in den individuellen Reaktionsbereichen des Reaktionsträgers erzeugen. Dadurch ist eine sehr effiziente naßchemische Synthese eines Oligomer- oder Polymersondenarrays in einem Reaktionsträger möglich. Dies kann computergesteuert erfolgen, wodurch die Erzeugung von beliebigen Nukleotidkombinationen in jedem Reaktionsbereich ermöglicht wird. Die Analyse kann ebenfalls direkt im Reaktionsträger erfolgen, wobei eine permanente Prozeßkontrolle möglich ist.

Durch ein entsprechendes Multiplexen der Fluide kann die Zahl der Herstellungszyklen von "Sondenarrays" reduziert werden. Für die ortsspezifische Erzeugung einer Vielzahl unterschiedlicher Oligo- oder Polymersonden von beispielsweise 20 Basen Länge auf einer planaren Oberfläche mittels örtlicher Photoaktivierung benötigt man in jeder Ebene vier Synthesezyklen, was durch die vier verschiedenen Basen bedingt ist. Insgesamt werden also 4 x 20 = 80 Zyklen benötigt. Dabei besteht keine systematische Möglichkeit die Anzahl an Synthesezyklen zu reduzieren. Bei der Synthese im mikrofluidischen Reaktionsträger bietet sich hingegen die Möglichkeit, die Einsatzstoffe, also die Mono- oder Oligomere, gleichzeitig auf mikrofluidische Subbereiche zu verteilen. Dadurch lassen sich die Synthesezyklen bei Verwendung von Tetrameren beispielsweise auf minimal 5 Zyklen reduzieren. Die genaue Anzahl der für einen spezifischen Sondenarray benötigten Zyklen ist für jedes Sondenmuster individuell und kann nur als statistischer Mittelwert angegeben werden, wenn die Anzahl an Reaktionsbereichen im Reaktionsträger, die Anzahl an parallelen fluidischen Subräumen und die Länge der zu synthetisierenden Oligomere vorgegeben ist.

Folgende Verfahren werden mit dem erfindungsgemäßen Reaktionsträger anwendbar: Neben der Synthese von Oligomeren und Polymeren bis zu ganzen Genen und Genomen bietet sich die Möglichkeit des "de novo"-Sequenzierens von nicht bekannten Polymeren wie DNA, RNA, PNA, LNA, Proteinen und anderen durch einen Sequenzvergleich mit aufbereitetem Probenmaterial. Darüber hinaus möglich ist das Re-Sequenzieren von Polymeren, also der Vergleich von bekannten mit unbekannten Sequenzen, wobei die bekannten Sequenzen gezielt ausgewählt werden. Ebenfalls möglich ist die Herstellung von Substanzbibliotheken für Screening- und Analyseverfahren, insbesondere zur Nukleinsäure-Analyse über Hybridisierung.

In dem erfindungsgemäßen mikrofluidischen Reaktionsträger lassen sich alle Vorgänge von der Synthese bis zur Analyse einfacher oder komplexer Moleküle integrieren und diese sehr effizient durchführen. Dies ermöglicht zum Beispiel die flexible und kostensparende Analyse einer großen Zahl von Polymeren durch Bereitstellen einer Vielzahl von individuellen und spezifischen Polymersonden in miniaturisiertem Format mit anschließendem Vergleich der Sonden mit Analyten des Probenmaterials. Dadurch kann in Screening- und Analyseverfahren eine große Menge an Meßdaten erzeugt werden und somit die Informationsfülle biologischer Systeme effizient in kürzester Zeit ganzheitlich bewältigt werden.

Anwendungsfelder sind außerdem Verfahren und Geräte zur kontinuierlichen, diskreten Fragmentanalyse, welche durch die vorliegende Erfindung beschleunigt und damit effizient einsetzbar gemacht werden, sowie prinzipiell alle Anwendungen der Oligo/Polymeranalyse wie bei Liquid Chromatographie/High Pressure Liquid Chromatographie, Gaschromatographie, Dünnschichtchromatographie, Gelelektrophorese, Kapillarelektrophorese, Massenspektrometrie etc. sowie alle Anwendungen von "Sonden Arrays". Weiterhin unterstützt wird damit die Substanzentwicklung und das Austesten von entsprechenden Substanzen u.a. in der Pharmaforschung. Weitere wichtige Anwendungsgebiete sind die Molekulare Diagnostik, DNA- und/oder RNA-Analyse, Screening nach molekularen Interaktionen beispielsweise in der lmmunologie, Molekularbiologie, Histologie und Kombinatorischen Chemie.

Bei der Gestaltung gibt es ebenso wie bei der Fertigung der Reaktionsträger eine Vielzahl von Ausführungsvarianten, die in den folgenden Skizzen dargestellt sind:

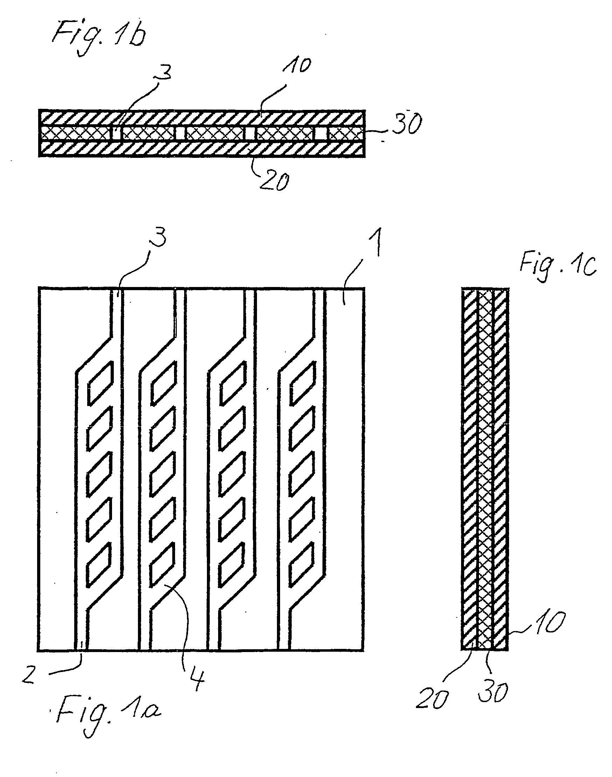

- Fig.1a: zeigt eine zweidimensionale Struktur des mikrofluidischen Reaktionsträgers in der Draufsicht. Fig. 1 b und 1 c zeigen die dazugehörigen Schnittdarstellungen: Die Mikrokanalstruktur 1 befindet sich in der mittleren Strömungsebene 30 des Reaktionsträgers. Diese mittlere Strömungsebene wird von der unteren Deckschicht 10 und der oberen Deckschicht 20 abgeschlossen. Die Strömungsstruktur besteht aus Zuführungskanälen 2 und Abführungskanälen 3, sowie den dazwischenliegenden Reaktionskanälen 4 mit jeweils mindestens einem Reaktionsbereich.

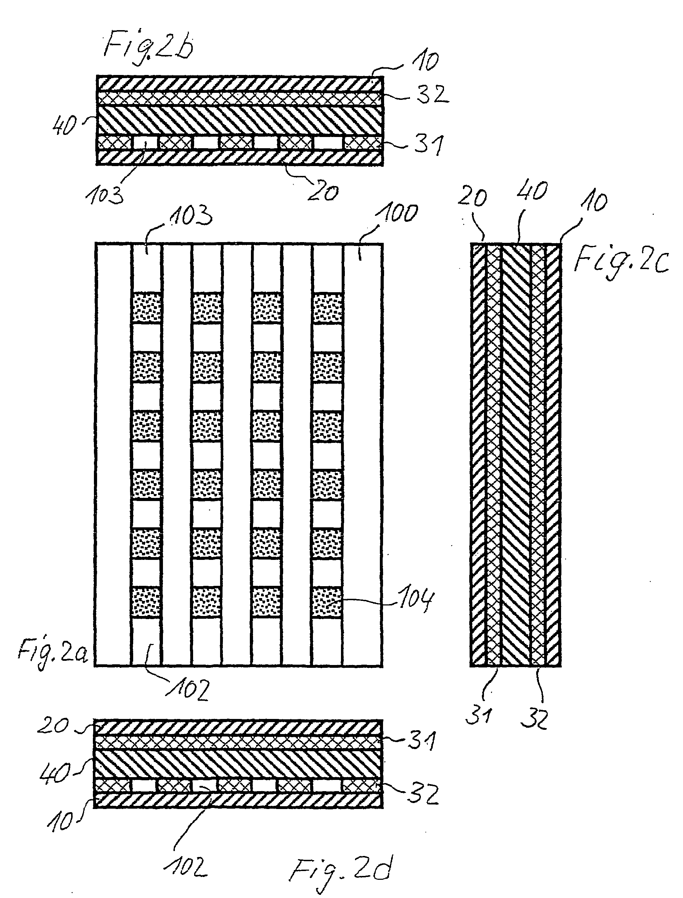

- Fig.2: zeigt eine dreidimensionale Struktur des mikrofluidischen Reaktionsträgers in der Draufsicht. Fig. 2b, 2c und 2d zeigen die dazugehörigen Schnittdarstellungen: Die Mikrokanalstruktur 100 besteht aus der unteren Fluidzuführungsstruktur 32 mit den Mikrokanälen 102 und der oberen Abführungskanalstruktur 31 mit den Mikrokanälen 103. Dazwischen befinden sich in der mittleren Schicht 40 die annähernd senkrecht zur Zuführung und Abführung angeordneten Verbindungs- bzw. Reaktionskanäle in den Reaktionsbereichen 104. Die Deckschichten 20 und 30 sind wahlweise transparent oder lichtundurchlässig.

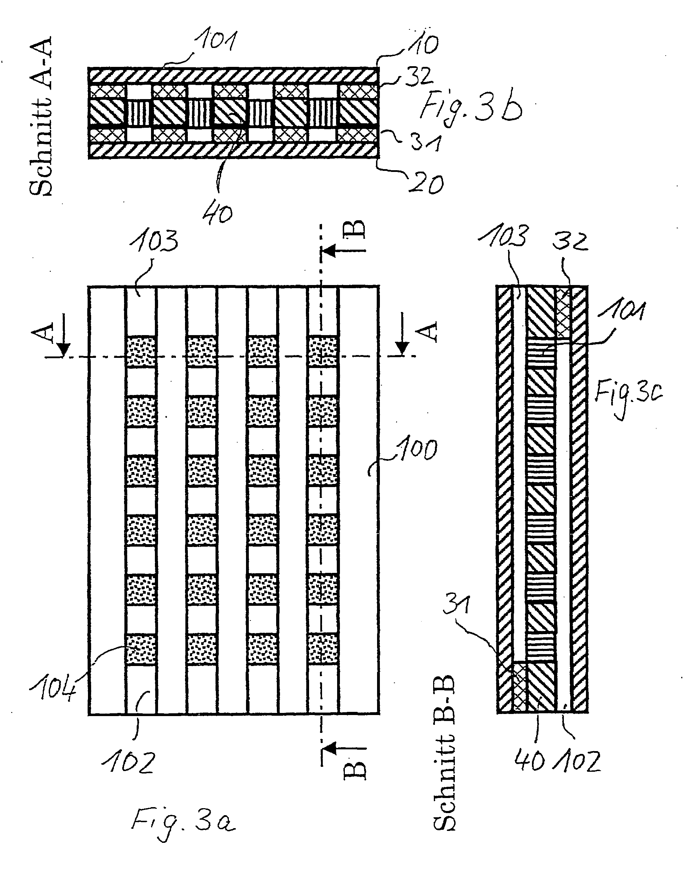

- Fig. 3a, 3b und 3c: zeigen nochmals die Darstellungen der Fig. 2a, 2b und 2c. Dabei verdeutlichen die Schnittdarstellungen den Strömungsverlauf durch die Zuführungskanäle 102, die Reaktionskanäle 101 in den Reaktionsbereichen 104 und die Fluidabführung 103.

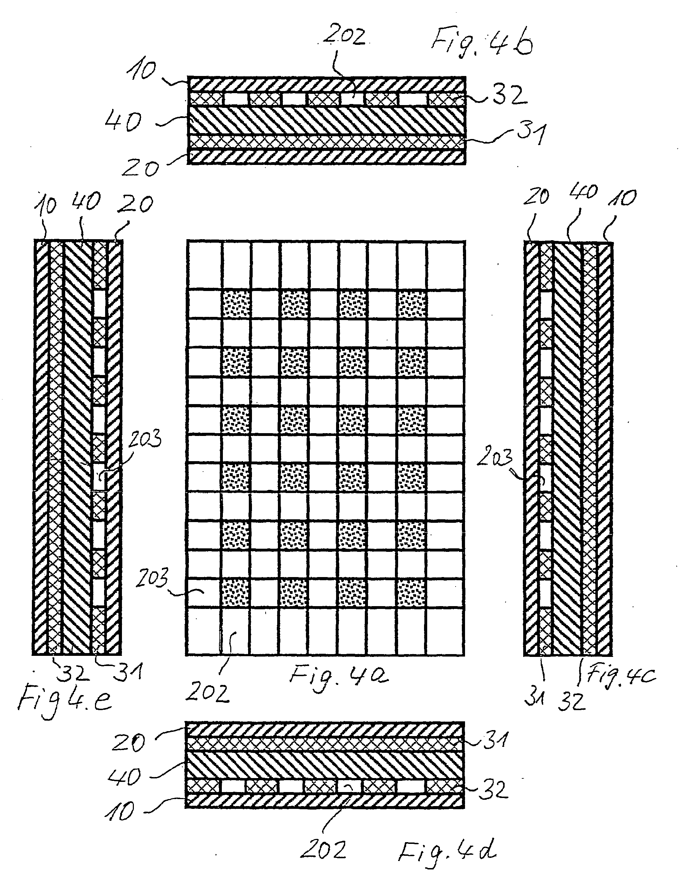

- Fig.4a: zeigt eine dreidimensionale Kreuzstruktur des mikrofluidischen Reaktionsträgers in der Draufsicht. Fig. 4b, 4c, 4d und 4e zeigen die dazugehörigen Schnittdarstellungen: Die Mikrokanalstruktur 200 befindet sich in der unteren Fluidzuführungs- und Fluidabführungsstruktur 32 mit den Mikrokanälen 202 und der oberen Fluidzuführungs- und Fluidabführungsstruktur 31 mit den Mikrokanälen 203, jeweils um 90° zueinander gedreht. Dazwischen befinden sich in der mittleren Schicht 40 die senkrecht zur Zuführung und Abführung angeordneten Verbindungs- bzw. Reaktionskanäle in den Reaktionsbereichen 204. Die Deckschichten 20 und 30 sind wahlweise transparent oder lichtundurchlässig.

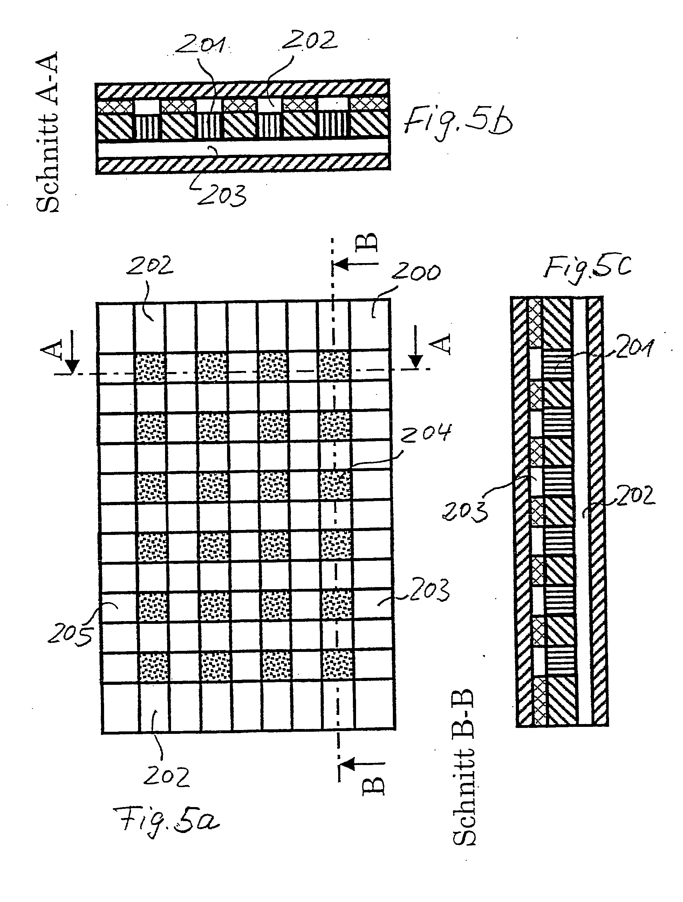

- Fig.5a, 5b und 5c: zeigen nochmals die Darstellungen der Fig. 4a, 4b und 4c. Dabei verdeutlichen die Schnittdarstellungen der Mikrostruktur 200 den Strömungsverlauf durch die Zuführungs- und Abführungskanäle 202 und 203, sowie die Reaktionskanäle 201 in den Reaktionsbereichen 204.

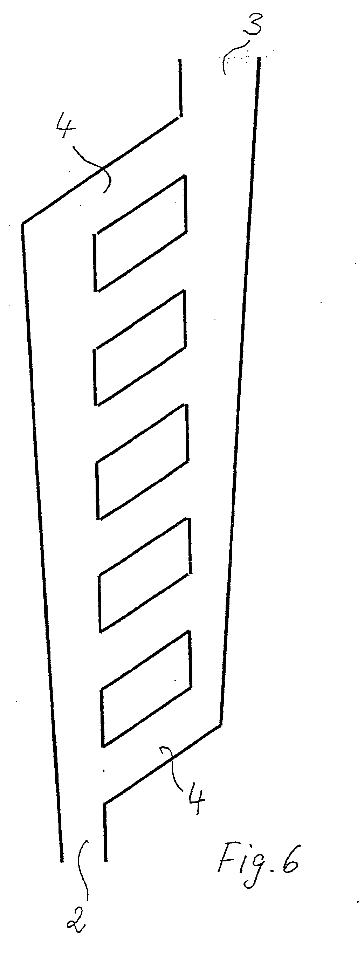

- Fig. 6: zeigt die Darstellung einer einzelnen zweidimensionalen Strömungsstruktur analog Fig.1 mit veränderten Querschnitten der Zuführungskanäle 2 und der Abführungskanäle 3 zur gezielten Strömungsbeeinflussung. Die Reaktionskanäle 4 mit jeweils mindestens einem Reaktionsbereich sind hier im Querschnitt unverändert, können aber auch modifiziert werden.

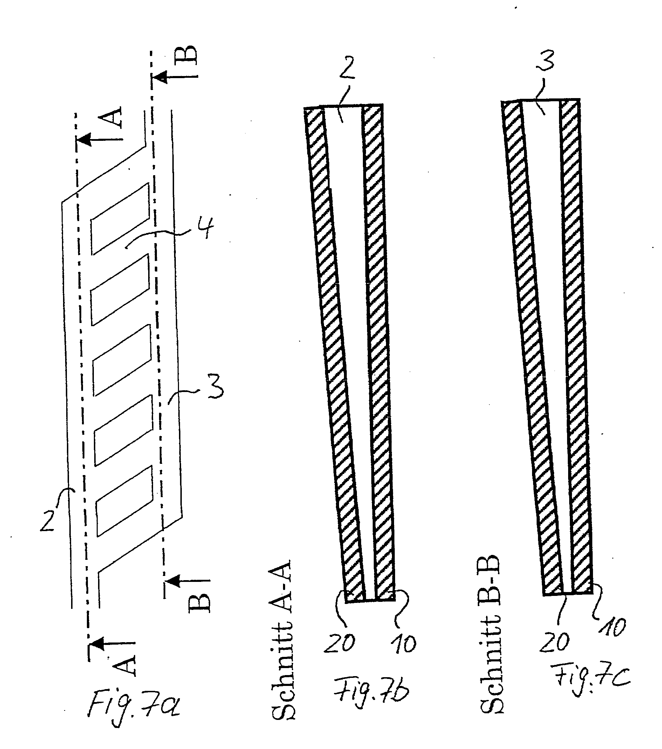

- Fig.7a: zeigt analog zu Fig.6 eine einzelne zweidimensionale Strömungsstruktur mit in der Höhe der Kanäle veränderten Querschnitten der Zuführungskanäle 2 und der Abführungskanäle 3 zur gezielten Strömungsbeeinflussung. Die Reaktionskanäle 4 mit jeweils mindestens einem Reaktionsbereich sind hier im Querschnitt ebenfalls verändert und nicht einheitlich in der Größe. Die Struktur wird durch die schräg angeordneten Deckschichten 10 und 20 geschlossen.

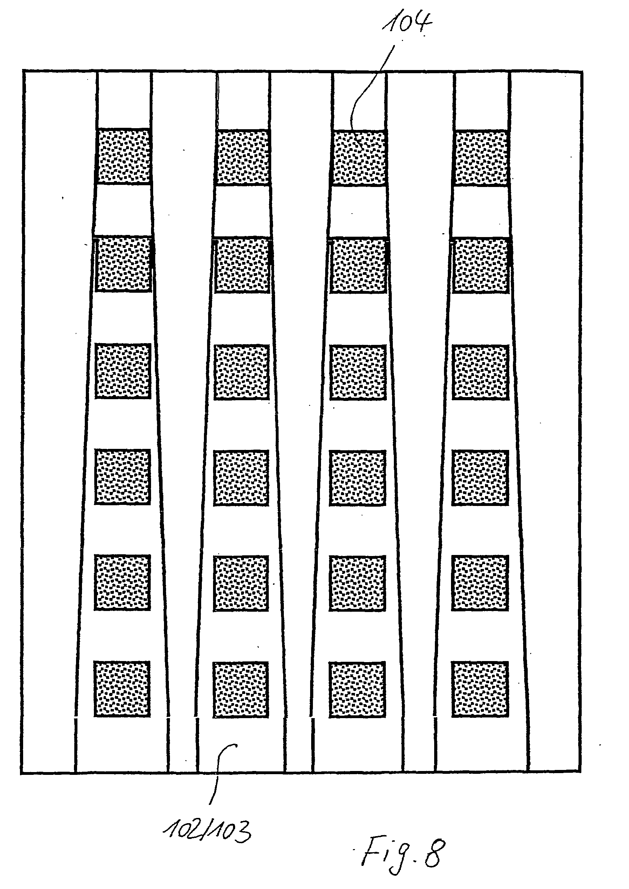

- Fig. 8: zeigt die Darstellung einer dreidimensionalen Strömungsstruktur analog Fig. 2 und 3 mit veränderten Querschnitten der Zuführungskanäle 102 und der Abführungskanäle 103 zur gezielten Strömungsbeeinflussung. Die Reaktionskanäle in den Reaktionsbereichen 104 sind dabei in ihrer Größe unverän- dert.

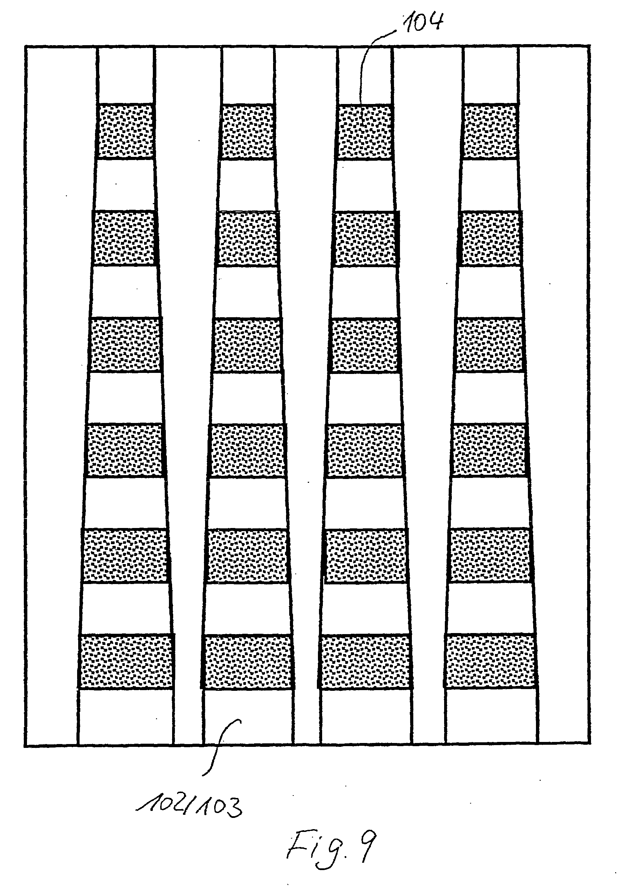

- Fig. 9: zeigt eine zu Fig. 8 analoge Darstellung, wobei die Reaktionsbereiche 104 entsprechender der Größe der Zuführungskanäle 102 und Abführungskanäle 103 unterschiedliche Größe aufweisen.

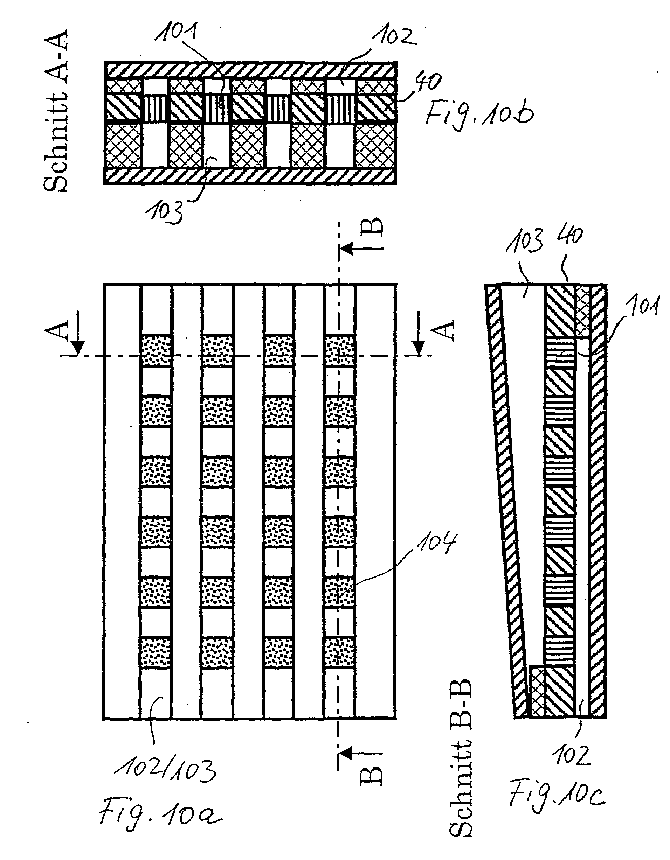

- Fig.10a, 10b und 10c: zeigen eine zu Fig. 3a, 3b und 3c analoge Darstellung, wobei sich die Zuführungskanäle 102 und die Abführungskanäle 103 in ihrer Höhe verändern und damit die Strömung beeinflussen. Die Reaktionsbereiche 104 und die Reaktionskanäle 101 sind, bedingt durch die Dicke der mittleren Strukturschicht 40, einheitlich lang.

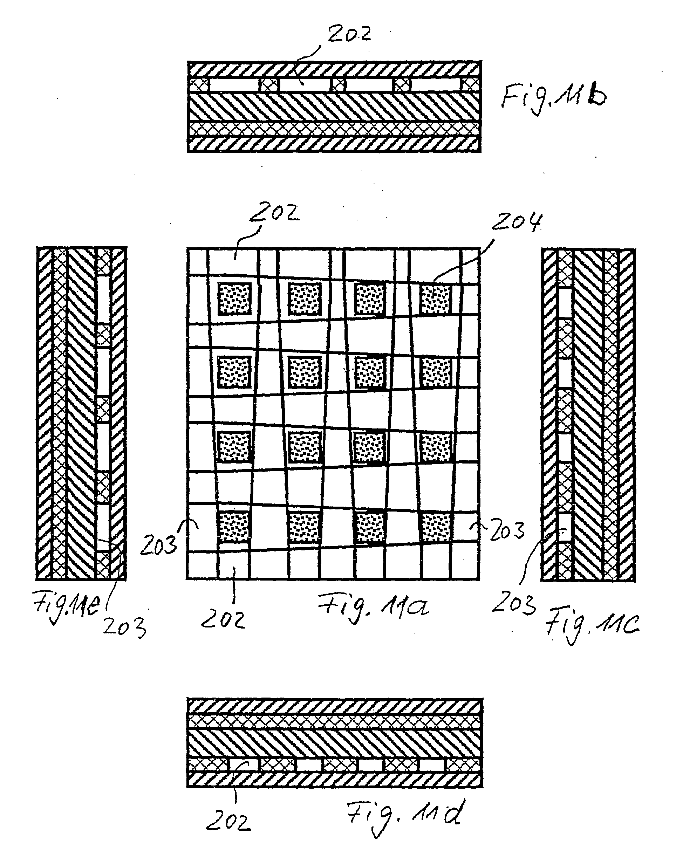

- Fig.11a, 11b, 11c, 11d und 11e: zeigen eine dreidimensionalen Kreuzstruktur der Strömung in einer zu Fig. 4a, 4b, 4c, 4d und 4e und 5a, 5b und 5c analogen Darstellung mit veränderten Querschnitten der Zuführungskanäle 202 und Abführungskanäle 203 zur gezielten Strömungsbeeinflussung. Die Reaktionskanäle in den Reaktionsbereichen 204 sind dabei von unveränderter Größe.

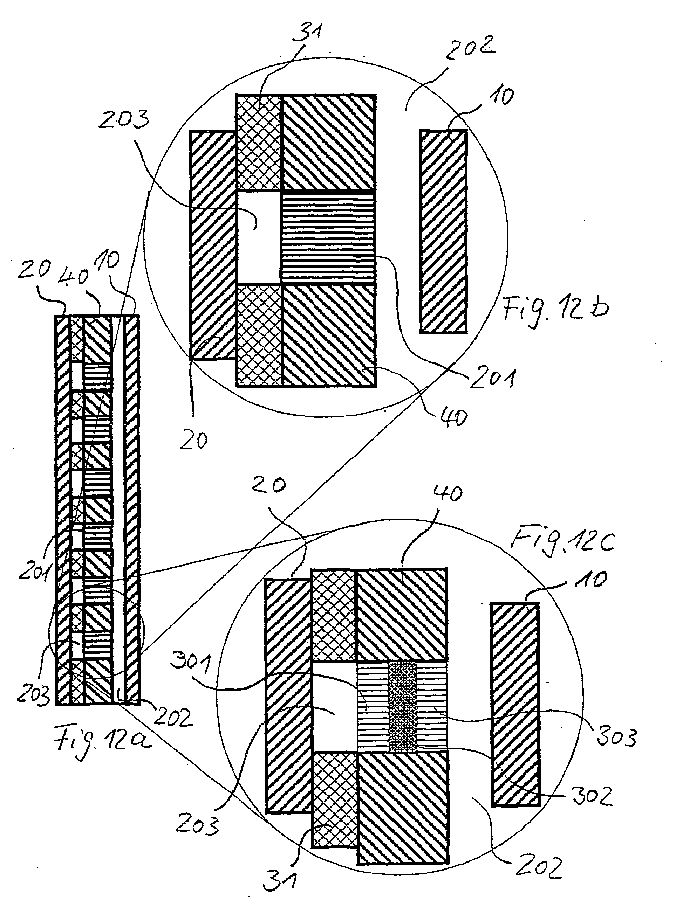

- Fig.12a: zeigt die Darstellung der Fig. 5c der Kreuzstruktur mit zwei Detailvarianten 12b und 12c. Das Detail 12b stellt die Struktur aus den Deckschichten 10 und 20 sowie einer mittleren Schicht 40 mit den Reaktionsbereichen in den Reaktionskanälen 201 sowie den Zuführungskanälen 202 und den Abführungskanälen 203 dar. Im Detail 12c sind die Reaktionskanäle 201 aus der Variante 12b jeweils durch eine dreischichtige Mikrostruktur ersetzt. Diese umfaßt zwei Schichten 301 und 303 zur Glättung und Stabilisierung der Zu- und Abströmung 202 und 203 sowie einer eigentlichen Reaktionsschicht 302 aus weiteren Mikrokanälen oder beispielsweise einem Glasflies.

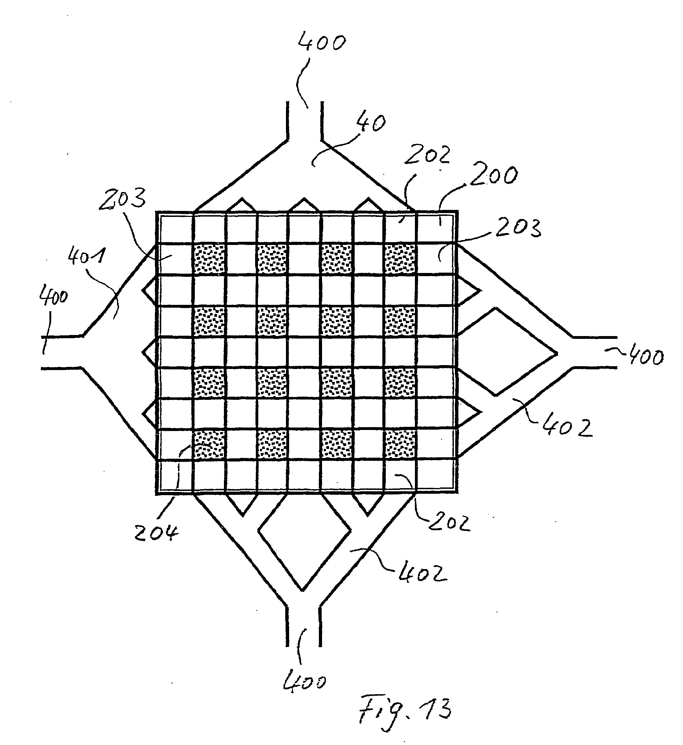

- Fig.13: zeigt eine Anschlußvariante der Mikro-Kreuzstruktur 200 nach Fig. 4a, 4b, 4c, 4d, 4e und 5a, 5b und 5c mit zwei Mikroanströ- mungskanalvarianten 401 und 402. Beide Varianten verbinden einen Kanal für die Fluidversorgung 400 jeweils mit allen parallelen Kanälen 202 und 203 der beiden Ebenen. So können sämtliche Reaktionsbereiche 204 gleichzeitig auf verschiedenen Zu- und Abführungsvarianten mit Fluid bespült werden.

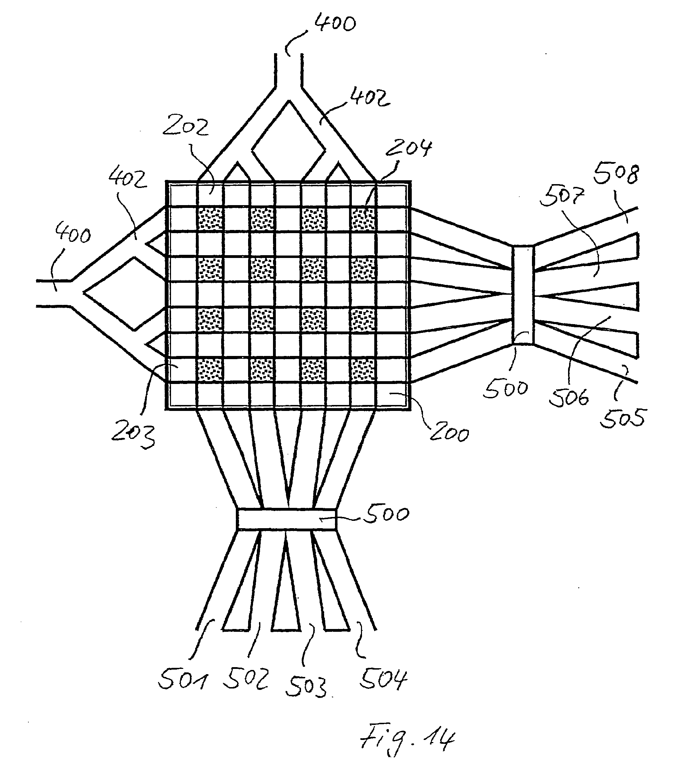

- Fig.14: zeigt eine zu Fig.13 analoge Darstellung mit zwei in die Fluidversorgung integrierten Ventilen 500. Diese versorgen die Mikrokanalstruktur 200 über die Kanäle in der einen Ebene 202 und der anderen Ebene 203. Dadurch können die Reaktionskanäle in den Reaktionsbereichen 204 mit Fluid bespült werden. Es können ein, mehrere oder alle Reaktionsbereiche 204 gleichzeitig mit Fluid bespült werden. Durch die Ventilstellung und die Strömungsrichtung durch die Reaktionskanäle können schnell beliebige Fluidversorgungszyklen realisiert werden. Hierzu sind nur die Ventile 500 zu verstellen und mit Unteroder Überdruck zu beaufschlagen. Auch die einheitlichen Zuführungen 400, hier mit der Kanalvariante 402, können in die Fluidzyklen integriert werden.

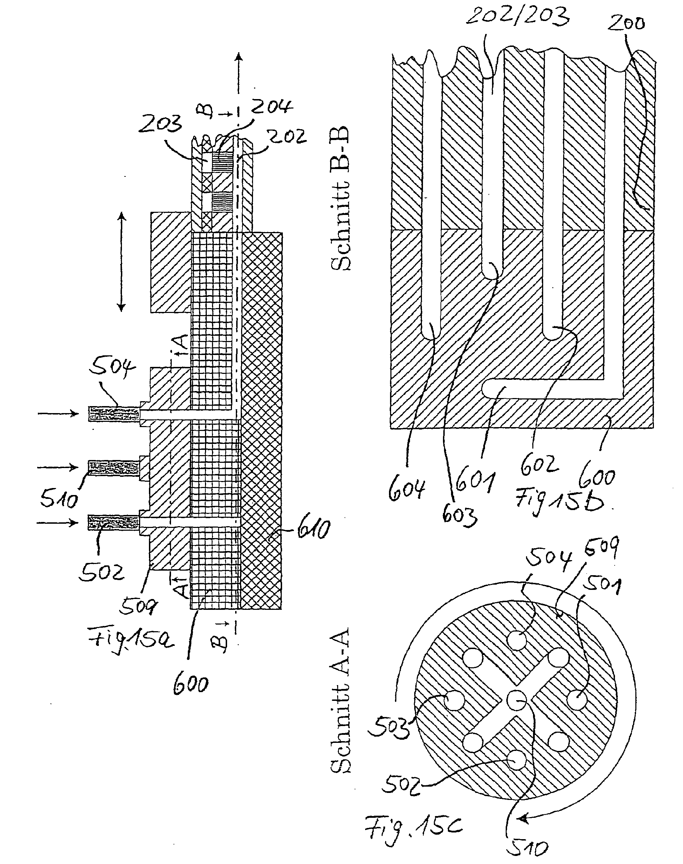

- Fig.15a: zeigt eine Ausführungsvariante des Ventils 500 aus Fig.14 mit weiteren Schnittdarstellungen 15b und 15c. Das Ventil ist horizontal in Mikrotechnik ausgeführt. Es besteht im wesentlichen aus einer Scheibe 509 und einer Platte 600. Die Platte ist mit der Mikrostruktur 200 über Kanäle 601 bis 604 verbunden, so daß wahlweise die Fluide der Zuführungskanäle bzw. der Mikrotanks hinter den Kanälen 501 bis 504 in die Kanäle 202 der Mikrostruktur gepumpt werden können. Die Zuordnung kann durch Drehen der Ventilscheibe 509 seriell verändert werden. Dieses Ventil 500 kann gemäß Fig.14 auch an beide Kanalstrukturen 202 und 203 der Kreuzstruktur 200 angeschlossen werden. Damit können die Reaktionskanäle individuell mit Fluid benetzt werden. Über eine zentrale Zuführung 510 im Ventil 500 werden analog zu den starren Zusammenführungen 401 und 402 aus Fig. 13 die einzelnen Mikrokanäle 601 bis 604 wahlweise verbunden, beispielsweise für einheitliche Bespülungen beim Reinigen oder anderen einheitlichen Schritten z.B. bei der ortsaufgelösten Synthese im Reaktionsträger.

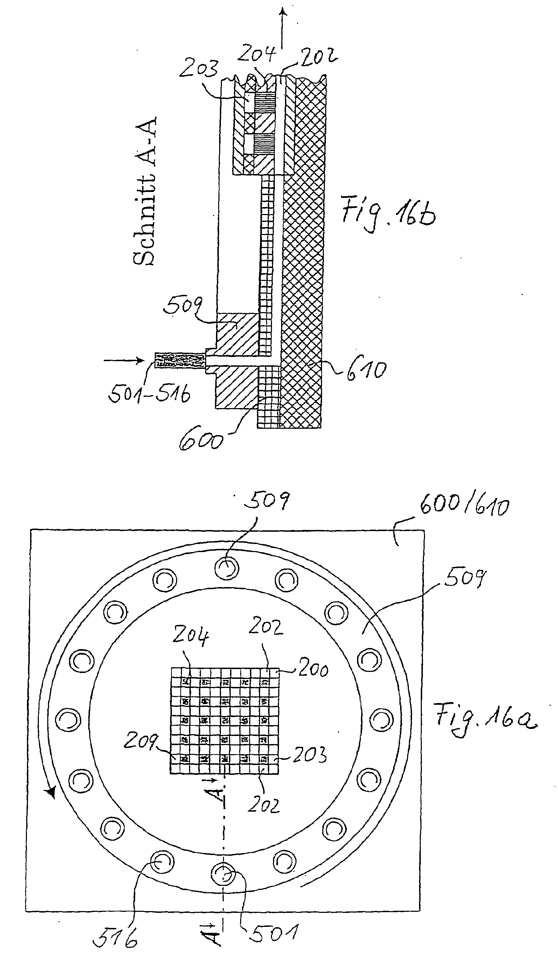

- Fig.16a: zeigt eine weitere Ausführungsvariante des Multiplexventils 500 mit der Schnittdarstellung 16b. Hier sind die einzelnen Versorgungskanäle 501 bis 516 kreisförmig um den Reaktionsträger 200 angeordnet. Das Prinzip entspricht Fig.15a, 15b, 15c. Es können damit jedoch mehr oder größere Anschlüsse realisiert werden. Die Scheibe 509 befindet sich wieder auf einer zweischichtigen Grundplatte 600 und 610.

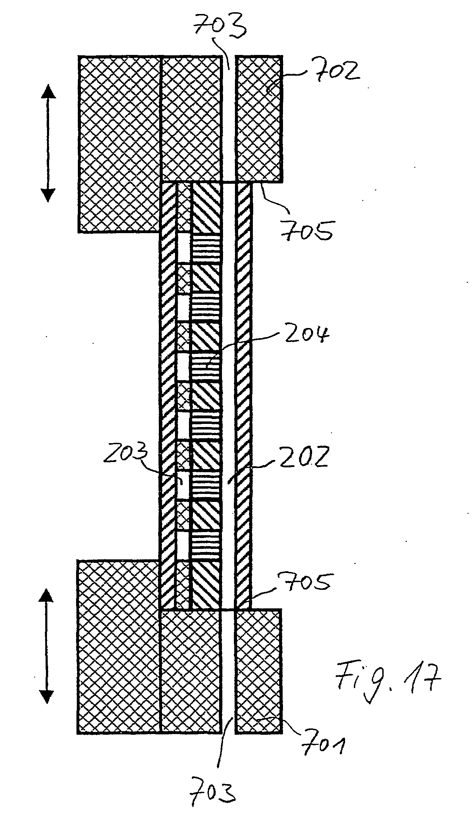

- Fig.17: zeigt einen fluidischen Reaktionsträger im Querschnitt, der durch eine Spannvorrichtung aufgenommen ist, die mit zwei gegenüberliegenden Spannbacken 701 und 702 mit einer integrierten Strömungsführung 703 versehen ist, wobei diese Strömungsführung in einer Strömungsebene 202 ohne Biegung etc. in den Kanälen auskommt. Die gleiche Anordnung ist auch für die Kanäle 203 möglich. Weiterhin dargestellt ist eine schmale Dichtfläche 705.

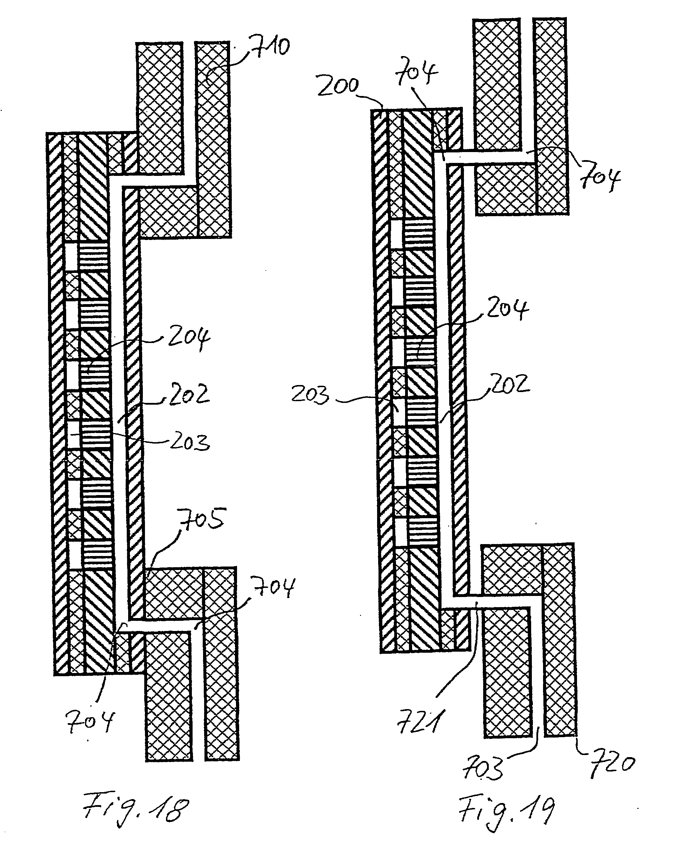

- Fig.18: zeigt eine weitere Anschlußvariante mit Strömungsführung 703 mit Biegungen 704 in mindestens zwei Ebenen. Dargestellt ist weiterhin eine breite Dichtfläche 705 im Auflager 710.

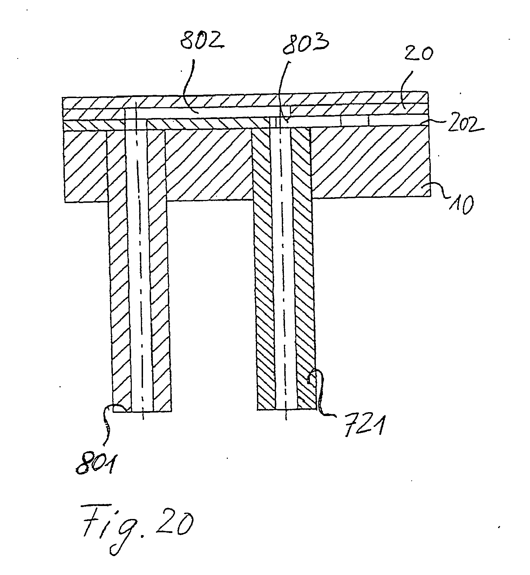

- Fig.19: zeigt eine weitere Anschlußvariante mit Strömungsführung 703 mit Biegungen 704 in mindestens zwei Ebenen. Mikrobeine 721 analog zu einem Prozessor aus der Halbleitertechnik verbinden den Aufnahmesockel 720 mit dem Reaktionsträger 200 bzw. den Kanälen 202. Die Kanäle 203 können analog angeschlossen werden. Eine Dichtung erfolgt durch die Mikrobeine 721 durch verkleben oder einstecken.
- Fig.20: zeigt am Beispiel der Mikrobeine 721 aus Fig.19 eine Hinterspülung 803 zur Vermeidung von Ablagerungen in einer Biegung der Strömung und der damit verbundenen Verschleppungsgefahr. Diese Mikrobeine 721 sind in dem Reaktionsträger in der unteren Deckschicht 10 verankert. Durch die zweite Reihe an Reinigungsbeinen 801 kann gezielt Flüssigkeit über die Kanäle 802 in die Ecken 803 gespült werden und dadurch eine Ablagerung vermieden bzw. beseitigt werden.

## Patentansprüche

1. Verwendung eines eine Strömungskanalstruktur für das Durchleiten von Fluiden enthaltenden mikrofluidischen Reaktionsträgers zur Synthese von Oligomeren oder Polymeren, wobei die Strömungskanalstruktur Reaktionsbereiche (4; 104), Fluidzuführungskanäle (2; 102) für die Fluidzuführung zu den Reaktionsbereichen (4; 104) und Fluidabführungskanäle (3; 103) für die Abführung von Fluid von den Reaktionsbereichen (4; 104) enthält und wobei die Reaktionsbereiche von Verbindungskanälen gebildet sind, die Fluidzuführungskanäle (2; 102) mit Fluidabführungskanälen (3; 103) verbinden, derart, dass aus jedem Reaktionsbereich (4; 104) Fluid unter Umgehung der jeweiligen anderen Reaktionsbereiche (4; 104) abführbar ist.

2. Verwendung eines mikrofluidischen Reaktionsträgers nach Anspruch 1, wobei jeder Strömungskanal (2, 3; 102, 103; 202, 203) individuell über ein Ventilsystem mit Fluid beströmt bzw. entleert werden kann.

3. Verwendung eines mikrofluidischen Reaktionsträges nach einem der vorhergehenden Ansprüche, wobei die Strömungskanalstruktur einseitig oder beidseitig mit einer transparenten Deckschicht versehen ist.

4. Verwendung eines mikrofluidischen Reaktionsträgers nach einem der vorhergehenden Ansprüche zur insbesondere lichtgesteuerten Synthese von Oligomer- oder Polymersonden, wie DNA, RNA, PNA, LNA, oder Proteinen.

5. Verwendung eines mikrofluidischen Reaktionsträgers nach einem der vorhergehenden Ansprüche zur integrierten Synthese und Analyse von Polymeren.

6. Verwendung eines mikrofluidischen Reaktionsträgers nach einem der vorhergehenden Ansprüche zur optischen Analyse der Hybridisierung von synthetisierten Polymersonden mit komplementären Fragmenten.

7. Verwendung eines mikrofluidischen Reaktionsträgers nach Anspruch 3, bei dem die Strömungskanalstruktur beidseitig mit einer transparenten Deckschicht versehen ist, wobei die transparenten Deckschichten aus Glas oder Kunststoff bestehen und in diese Deckschichten eine Struktur von Mikrolinsen derart integriert ist, dass das einfallende Licht auf die Reaktionsbereiche fokussiert wird und das ausfallende Licht einer Nachweisreaktion entsprechend gebündelt wird.

8. Verwendung eines mikrofluidischen Reaktionsträgers nach Anspruch 3, wobei die transparenten Deckschichten aus einer Vielzahl von parallelen verschmolzenen Glasfasern bestehen, welche derart zu einer transparenten Wabenstruktur ausgebildet sind, dass das ein- und ausfallende Licht parallelisiert und ein seitliches reflexionsbedingtes Ausbreiten des Lichtes in der Deckschicht verhindert wird.

9. Verwendung eines mikrofluidischen Reaktionsträgers nach einem der vorhergehenden Ansprüche, wobei die Wände zwischen den Zuführungskanälen (2; 102; 202) und den Abführungskanälen (3; 103; 203) lichtundurchlässig ausgeführt wird.

10. Verwendung eines mikrofluidischen Reaktionsträgers nach einem der vorhergehenden Ansprüche, wobei der Reaktionsträger eine Siliziumschicht aufweist, in welche die Strömungskanäle (2, 3; 102, 103; 202, 203) eingeätzt worden sind.

11. Verwendung eines mikrofluidischen Reaktionsträgers nach einem der vorhergehenden Ansprüche, wobei die Reaktionsbereiche individuell durch Licht photoaktiviert werden können und Licht ebenfalls ortsspezifisch für jeden der Reaktionsbereiche detektiert werden kann.

12. Verwendung eines mikrofluidischen Reaktionsträgers nach einem der vorhergehenden Ansprüche, wobei eine Vielzahl von jeweils unterschiedlichen Rezeptoren an spezifische Bereiche an den Träger gebunden wird bzw. ist.

13. Verwendung eines mikrofluidischen Reaktionsträgers nach Anspruch 12, wobei die Rezeptoren ausgewählt sind aus Nukleinsäuren, wie DNA, RNA, Nukleinsäureanaloga, wie Peptidnukleinsäuren (PNA), Peptiden und Sacchariden.

14. Verwendung eines mikrofluidischen Reaktionsträgers nach Anspruch 12 oder 13, wobei die Rezeptoren aus einzelnen Synthesebausteinen an dem Träger synthetisiert werden.

15. Verwendung eines mikrofluidischen Reaktionsträgers nach einem der vorhergehenden Ansprüche, wobei zwischen Rezeptor und Träger ein Baustein eingefügt ist, der eine Abspaltung des Rezeptors erlaubt.

16. Verwendung eines mikrofluidischen Reaktionsträgers nach Anspruch 15, wobei nach Abspaltung des Rezeptors eine funktionelle Gruppe auf dem Träger zurückbleibt, welcher zur Synthese eines neuen Rezeptors geeignet ist.

17. Verwendung eines mikrofluidischen Reaktionsträgers nach einem der Ansprüche 3 bis 16, wobei durch eine transparente Deckschicht Lumineszenz- und Fluoreszenzmessungen im Rücklichtverfahren durchgeführt werden.

18. Verwendung eines mikrofluidischen Reaktionsträgers nach einem der Ansprüche 3 bis 17 mit beidseitiger Abdeckung durch transparente Deckschichten, wobei jeder Reaktionsbereich über eine programmierbare Lichtquellenmatrix Licht definierter Wellenlänge ausgesetzt wird und über das Licht und die Fluidversorgung biochemisch funktionalisiert wird und gleichzeitig über die zweite transparente Deckschicht alle Vorgänge im Reaktionsträger optisch überwacht werden.

19. Verwendung eines mikrofluidischen Reaktionsträgers nach einem der Ansprüche 3 bis 18 mit beidseitiger Abdeckung durch transparente Deckschichten, wobei durch die beiden transparenten Deckschichten Lumineszenz- und Fluoreszenzmessungen sowie Absorptionsmessungen im Durchlichtverfahren durchgeführt werden.

20. Verwendung eines mikrofluidischen Reaktionsträgers nach einem der vorhergehenden Ansprüche zur individuellen Benetzung und biochemischen Funktionalisierung jedes Reaktionsbereiches im Reaktionsträger.
